Europäisches Patentamt

**European Patent Office**

**Office européen des brevets**

(11) Publication number: **0 249 342 B1**

(12) **EUROPEAN PATENT SPECIFICATION**

(45) Date of publication of patent specification: **19.01.94** (51) Int. Cl.5: **C08L 23/10**, C08K 5/00, //(C08L23/10,C08K5:00)

(21) Application number: **87304264.2**

(22) Date of filing: **13.05.87**

(54) **Polypropylene films.**

---

(30) Priority: **13.05.86 JP 110231/86**
**11.06.86 JP 135593/86**

(43) Date of publication of application:
**16.12.87 Bulletin 87/51**

(45) Publication of the grant of the patent:
**19.01.94 Bulletin 94/03**

(84) Designated Contracting States:
**DE FR GB IT**

(56) References cited:
**GB-A- 915 589**
**US-A- 3 562 291**
**US-A- 4 345 046**

(73) Proprietor: **SUMITOMO CHEMICAL COMPANY, LIMITED**
**Kitahama 4-chome 5-33**
**Chuo-ku Osaka 541(JP)**

(72) Inventor: **Masahiro, Kakugo**
**1096-17, Mimomicho-4-chome**
**Narashino-shi(JP)**
Inventor: **Seiichiro, Ima**
**9, Yushudainishi-1-chome**
**Ichihara-shi(JP)**

(74) Representative: **Lamb, John Baxter et al**
**MARKS & CLERK**
**57-60 Lincoln's Inn Fields**
**London WC2A 3LS (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to multilayer films comprising polypropylene films.

Since it has good optical and mechanical properties and good packaging characteristics, polypropylene film is widely used in the packaging of foods, fibres and the like. However, conventional polypropylene film has the disadvantage that, when stored or treated at a temperature of 45°C or above, the film is reduced in slipperiness, one of the important characteristics of a polypropylene film, thus becoming liable to cause problems in secondary processing steps such as printing, laminating and the like, and in packaging applications.

GB-A-0915589 discloses polypropylene films containing combination of acid amides and US-A-3562291 discloses polypropylene containing erucamide. Neither discloses multilayer films comprising a polypropylene film contains certain special amides.

It is an object of this invention to provide a multilayer film which has reduced susceptibility to deterioration in slip characteristics during storage at elevated temperatures or heat treatment at elevated temperatures.

According to the invention, there is provided a multilayer film composed of a polypropylene film layer and a substrate film layer, characterized in that the polypropylene film layer has a composition comprising 100 parts by weight of a crystalline polypropylene and a total of from 0.05 to 1.0 parts by weight of a slipping agent [A] which is behenic acid amide and a slipping agent [B] which is erucic acid amide; the weight ratio of slipping agent [A] to slipping agent [B] being from 0.2:1 to 20:1; the polypropylene film constituting said polypropylene film layer having an initial coefficient of friction of 0.7 or less and the temperature at which the said coefficient of friction becomes 0.7 is 45°C or more.

The crystalline polypropylene for use in the invention can be any polypropylene which can be used in either unstretched or stretched film form. However, from the viewpoint of packaging performance, it is desirable to use a crystalline propylene/a-olefin copolymer having a melting point of from 100°C to 150°C, an ethylene content of from 0 to 10% by weight, a butene-1 content of from 0 to 35% by weight and a propylene content of from 65 to 98% by weight. If a crystalline propylene/a-olefin copolymer having a melting point below 100°C is used, the film is insufficient in stiffness, whereas if a copolymer having a melting point above 150°C is used, the film has insufficient heat-seal properties; both of which cases are liable to cause troubles in packaging operations. Most preferably the crystalline propylene/a-olefin copolymer is one having a melt flow index of 1 to 50 g per 10 minutes, a melting point of from 110° to 145°C, an ethylene content of from 1.0 to 7.0% by weight, a butene-1 content of 2.0 % by weight or more and a propylene content of from 70 % by weight or more.

The crystalline polypropylene described above can contain 0.1 to 10% by weight of polyethylene or other resins.

The slipping agents used in the invention comprise combinations of slipping agent [A] (behenic acid amide) and slipping agent [B] (erucic acid amide). Such a combination exhibits good performance with smaller amounts of slipping agents as compared with each slipping agent used alone.

The total amount of slipping agents [A] and [B] is from 0.05 to 1.0, preferably from 0.07 to 0.25, parts by weight per 100 parts by weight of crystalline polypropylene. The addition of a total amount below 0.05 part by weight is undesirable because of insufficiency in inital slip or in slip after heating, whereas the addition of a large amount, exceeding the necessary amount, is undesirable, because bleed-out of slipping agents at the film surface may impair the inherent characteristics of a polypropylene film and because the excessive addition is uneconomical. The ratio of slipping agent [A] to [B] is from 0.2:1 to 20:1. It is desirable to adjust the ratio so that the combination of slipping agents have a melting point in the range of 95° to 115°C. A ratio below 0.2:1 is undesirable because of the insufficient slip after heating, whereas a ratio above 20:1 is also undesirable because of insufficient initial slip.

The multilayer film of this invention is characterized by having, at least on one side, a monolayer polypropylene film with an initial coefficient of friction of 0.7 or less; the coefficient of friction becoming 0.7 on heating to 45°C or above. If the coefficient of friction becomes 0.7 at a temperature below 45°C, the film shows unsatisfactory slip during storage at elevated temperatures in summer and, in addition, ageing after dry lamination, for example, must be carried out at a temperature in the cold range below 40°C, resulting in an extended period of ageing which is unfavourable from an economic viewpoint. The multilayer film of the invention can be produced by known methods such as dry lamination and extrusion lamination.

As described above, the polypropylene film used in the invention has advantageous slip properties-both at an initial stage and at elevated temperatures. As a consequence, the film retains markedly stabilized slip after having been exposed to high temperatures in summer or ageing at temperatures above 45°C subsequent to the dry lamination. This is in contrast to conventional films which are liable to suffer from

EP 0 249 342 B1

marked deterioration in slip properties under such temperture conditions. Thus, the film of this invention has a reduced susceptibility to problems due to impaired slip properties in secondary processing and packaging steps.

The initial coefficient of friction of the multilayer film is preferably 0.6 or below and the coefficient of friction becomes 0.6 at a temperature of 45°C or above.

The film of this invention is in a multilayer film produced by laminating either an unstretched or stretched film with other films by means of conventional methods such as dry lamination and extrusion lamination. Examples of such other films include biaxially stretched polypropylene film, unsaturated nylon film stretched nylon film, stretched poly(ethyl terephthalate) film, aluminum foil and paper. The thickness of film layer formed is not subject to any particular restriction, but is preferably from 5 to 50 mm, most preferably from 15 to 40 mm.

The film of this invention may contain, if necessary, known additives such antioxidants, UV absorbers, antistatic agents, anti- frosting agents, antiblocking agents, etc. It is also possible to subject the film of this invention to surface treatment such as corona discharge treatment or flame treatment in the manner known in the art.

In order that the invention may be well understood, the following Examples are given by way of illustration only. In the examples the characteristic values measured were obtained by the following methods.

## 1. Melting flow index.

Melt flow index was determined according to JIS K 6758.

## 2. Melting point.

Melting point was determined on a sample (5 - 10 mg) sealed in a solid sample holder under a nitrogen atmosphere by means of a differential scanning calorimeter (DSC made by Perkin-Elmer Co.) at a heating rate of 5°C/minute. From the fusion diagram the peak temperature indicating the maximum heat absorption was taken as the melting point.

When the sample was a mixture of slipping agents or was a crystalline polypropylene, it was subjected to the following pretreatments, before melting point determination.

## Procedure for pretreatment.

### (a) Mixture of slipping agents.

A blend of slipping agents was thoroughly mixed by grinding in a mortar, placed in a solid sample holder, heated at 150°C for 30 seconds, and allowed to stand at room temperature for 12 hours.

### (b) Crystalline polypropylene.

The sample was sealed in a solid sample holder, fused at 220°C for 5 seconds under a nitrogen atmosphere in the calorimeter, and cooled down to 40°C at a cooling rate of 5°C/minute.

## 3. Ethylene content and butene-1 content.

Ethylene content was determined by the IR spectrum method as described under the heading "(i) random polymer" in page 256 of "Handbook for Polymer Analysis" (published by Asakura Shoten Co., 1985).

Butene-1 content was determined by IR spectrum method and the equation:

Buteen-1 content (% by weight) = 1.208 $K'_{767}$

## 4. Haze.

ASTM D2457

3

5. Coefficient of friction:

Using a friction angle tester (Toyo Seiki Co.) the angle of sliding ($\theta$) was measured between two pieces of the film sample under a load of 6.3 cmL x 10.0 cmW x 1.9 cmH in size and 1 kg in weight. The coefficient of friction was expressed in terms of tan $\theta$. A smaller value indicates better slip properties.

Example 1

The crystalline polypropylene used was a crystalline propylene/ethylene/butene-1 terpolymer having an ethylene content of 2.1% by weight, a butene-1 content of 6.0% by weight, a propylene content of 91.9% by weight, a melt flow index of 5.2 g/10 min., and a melting point of 138°C.

To 100 parts by weight of the terpolymer, were added 0.09 part by weight of BNT-22H (melting point 113°C, Nippon Seika Co., slipping agent A) and 0.03 part by weight of Neutron -S (melting point 85°C, Nippon Seika Co., slipping agent B) followed by 0.05 part by weight of calcium stearate, 0.1 part by weight of Sumilizer BHT (Sumitomo Chemical Co.), and 0.2 part by weight of Syloid 244 (Fuji-Davison Co.). The mixture was thoroughly mixed and melt extruded from an extruder heated at 210°C. The extruded strand was pelletized by cutting. The mixture of BNT-22H (melting point 113°C).

To 100 parts by weight of the terpolymer, were added 0.09 part by weight of BNT-22H (melting point 113°C, Nippon Seika Co., slipping agent A) and 0.03 part by weight of Neutron -S (melting point 85°C, Nippon Seika Co., slipping agent B) followed by 0.05 part by weight of calcium stearate, 0.1 part by weight of Sumilizer BHT (Sumitomo Chemical Co.), and 0.2 part by weight of Syloid 244 (Fuji-Davison Co.). The mixture was thoroughly mixed and melt extruded from an extruder heated at 210°C. The extruded strand was pelletized by cutting. The mixture of BNT-22H (melting point 113°C) and Neutron-S (melting point 85°C) in the weight ratio 9:3 had a melting point of 108°C.

The resultant pellets were melt extruded through a 40-mm diameter T-die extruder at a resin temperature of 230°C and solidified by cooling on a cooling roll at 25°C to give an unstretched polypropylene film 30 $\mu$ thick. During the film formation the surface of cooling roll was inspected but substantially no adhered matter was detected.

The resulting film was pretreated in an air-circulating constant temperature bath at 35°C for 3 days. The pretreated film showed a haze of 3.1% and a coefficient of friction 0.35. The film was then heat-treated for 24 hours in an air-circulating constant temperature bath heated at 60°C. After having been allowed to stand at room temperature for one hour, the heat-treated film was found to have a coefficient of friction of 0.30.

The unstretched film, which had been preheated at 35°C for 3 days as described above, and a biaxially stretched polypropylene (OPP), 25 $\mu$m thick, were dry-laminated by applying 3 g/m$^2$ (solids basis) of Takelac A-967 (a polyurethane-base adhesive of Takeda Chemical Industries Co.) to give a multilayer film. The resulting multilayer film was heat-treated at 45°C for 24 hours. The coefficient of friction at the surface of the unstretched polypropylene film was found to be 0.28.

Example 2 and Comparative Example 1

An unstretched film and a multilayer film were prepared as described in Example 1 except that the amount of slipping agents [A] and [B] was varied as shown in Table 1 below. The performance characteristics of the resulting films are also shown in Table 1.

Comparative Example 2

Unstretched and multilayer films were prepared as described in Example 1, except that 0.1 part by weight of a slipping agent Neutron -S (melting point 85°C, Nippon Seika Co.) was used alone. The performance characteristics of the resulting film is shown in Table 1.

Table 1.

| Example and Comparative Example | Slipping agent | | | | | | M.p. of mixture °C |
| | Slipping agent [A] | | | Slipping agent [B] | | | |
| | Name | M.p. °C | Amount, parts by weight | Name | M.p. °C | Amount, parts by weight | |
|---|---|---|---|---|---|---|---|
| Example -1 | BNT-22H | 113 | 0.09 | Neutron® -S | 85 | 0.03 | 108 |
| " -2 | " | " | 0.06 | " | " | 0.02 | " |
| Comparative Example-1 | BNT-22H | 113 | 0.08 | - | - | - | - |

5

| Fouling of roll | Pretreated film | | Coefficient of friction of film, heat-treated at 60°C, tan θ | Coefficient of friction of multilayer film, heat treated at 45°C, tan θ | Suitability for secondary processing and for packaging |
|---|---|---|---|---|---|
| | Haze % | Coefficient of friction tan θ | | | |
| Very little | 3.1 | 0.35 | 0.30 | 0.28 | Good |
| " | 3.1 | 0.56 | 0.47 | 0.54 | " |
| " | 3.1 | 0.75 | 0.58 | 0.77 | Poor |

Table 1 (Cont'd)

Note:

BNT-22H                Nippon Seika, behenic acid amide,

Neutron*-S             Nippon Seika, erucic acid amide,

Denon*SL-1             Marubishi Yuka, oleic acid amide,

Examples 3 to 6 and Comparative Examples 3 and 4

Unstretched films and multilayer films were prepared as described in Example 1, except that 100 parts by weight of a crystalline propylene-ethylene-butene-1 terpolymer was blended with 1.5 parts by weight of a linear low-density polyethylene having a melt flow index of 12 g/10 min. and a density of 0.904 g/cm$^3$; that BNT-22H and Neutron -S were used as slipping agents [A] and [B] respectively; and that the thickness of the unstretched film was 20 $\mu$m. The performance characteristics of the resulting films are shown in Table 2.

**Table 2**

| Example and Comparative Example | Slipping agent | | | | M.p. of mixture °C |
| | BNT-22H | | Neutron ® -S | | |
| | M.p. °C | Amount, parts by wt. | M.p. °C | Amount, parts by wt. | |
| --- | --- | --- | --- | --- | --- |
| Example    - 3 | 113 | 0.05 | 85 | 0.07 | 96 |
| "          - 4 | " | 0.05 | " | 0.05 | 100 |
| "          - 5 | " | 0.105 | " | 0.015 | 111 |
| "          - 6 | " | 0.15 | " | 0.05 | 108 |
| Comparative Example    - 3 | " | 0.03 | " | 0.01 | 108 |
| "          - 4 | " | 0.01 | " | 0.10 | 84 |

- cont'd -

## Table 2 (Cont'd)

| Pretreated film | | Coefficient of friction of film heat-treated at 60°C tan θ | Coefficient of friction of multilayer film, heat-treated at 45°C tan θ | Suitability for secondary processing and for packaging |
|---|---|---|---|---|
| Haze % | Coefficient of friction tan θ | | | |
| 3.4 | 0.15 | 0.62 | 0.54 | Good |
| 3.4 | 0.32 | 0.48 | 0.47 | Good |
| 3.5 | 0.67 | 0.38 | 0.45 | " |
| 3.4 | 0.27 | 0.23 | 0.31 | " |
| 3.3 | 1.5 | 1.2 | 1.3 | Poor |
| 3.4 | 0.10 | 1.1 | 1.3 | " |

Examples 7 to 9

Unstretched films were prepared as described in Exapmple 1, except that the crystalline polypropylene used was a crystalline propylene-ethylene copolymer having an ethylene content of 6.0% by weight, a propylene content of 94.0% by weight, a melt flow index of 12.5 g 10 min., and a melting point of 134°C or, a crystalline propylene/butene-1 copolymer having a butene-1 content of 19.1% by weight, a propylene content of 80.9% by weight, a melt flow index of 3.5 g/10 min., and a melting point of 139°C; or a crystalline propylene/butene-1 copolymer having a butene-1 content of 26.2% by weight, a propylene content of 73.8% by weight, a melt flow index of 4.1 g/10min., and a melting point of 117°C; and that to 100 parts by weight of each crystalline poly-propylene, were added 0.09 part by weight of a slipping agent BNT-22H and 0.03 part by weight of a slipping agent Neutron -S. The performance characteristics of the unstretched films are shown in Table 3.

Table 3

| Example | Fouling of roll | Pretreated film | | Coefficient of friction of film heat-treated at 60°C tan θ | Coefficient of friction of multilayer film, heat-treated at 45°C tan θ | Suitability for secondary processing and for packaging |
|---|---|---|---|---|---|---|
| | | Haze % | Coefficient of friction tan θ | | | |
| Example-7 | Very little | 2.5 | 0.34 | 0.31 | 0.41 | Good |
| Example-8 | " | 6.3 | 0.37 | 0.36 | 0.35 | " |
| Example-9 | " | 6.0 | 0.48 | 0.52 | 0.54 | " |

## Claims

1. A multilayer film composed of a polypropylene film layer and a substrate film layer, characterized in that the polypropylene film layer has a composition comprising 100 parts by weight of a crystalline polypropylene and a total of from 0.05 to 1.0 parts by weight of a slipping agent [A] which is behenic acid amide and a slipping agent [B] which is erucic acid amide; the weight ratio of slipping agent [A] to slipping agent [B] being from 0.2:1 to 20:1; the polypropylene film constituting said polypropylene film layer having an initial coefficient of friction of 0.7 or less and the temperature at which the said coefficient of friction becomes 0.7 is 45°C or more.

**2.** A multilayer film according to claim 1, characterized in that the crystalline polypropylene is a crystalline propylene/α-olefin copolymer having an ethylene content of from 0 to 10% by weight, a butene-1 content of from 0 to 30% by weight and a propylene content of from 70 to 98% by weight.

**3.** A multilayer film according to claim 1 characterized in that the crystalline polypropylene is a crystalline propylene/α-olefin copolymer having a melt flow index of 1 to 50 g per 10 minutes, a melting point of from 110°C to 145°C, an ethylene content of from 1.0 to 7.0% by weight, a butene-1 content of 2.0 % by weight or more, and a propylene content of 70% by weight or more.

**Patentansprüche**

**1.** Mehrschichtfolie, zusammengesetzt aus einer Polypropylenfolienschicht und einer Substratfolienschicht, dadurch gekennzeichnet, daß die Polypropylenfolienschicht eine Zusammensetzung aufweist, die 100 Gew.-Teile eines kristallinen Polypropylens und zusammen 0,05 bis 1,0 Gew.-Teile eines Gleitmittels [A], nämlich Behensäureamid, und eines Gleitmittels [B], nämlich Erucasäureamid, umfaßt; das Gewichtsverhältnis des Gleitmittels [A] zum Gleitmittel [B] 0,2:1 bis 20:1 beträgt, die Polypropylenfolie, welche die Polypropylenfolienschicht bildet, einen anfänglichen Reibungskoeffizienten von 0,7 oder weniger aufweist und die Temperatur, bei der der Reibungskoeffizient den Wert 0,7 annimmt, 45°C oder mehr beträgt.

**2.** Mehrschichtfolie nach Anspruch 1, dadurch gekennzeichnet, daß das kristalline Polypropylen ein kristallines Polypropylen/α-Olefin-Copolymer mit einem Ethylengehalt von 0 bis 10 Gew.-%, einem Buten-1-Gehalt von 0 bis 30 Gew.-% und einem Propylengehalt von 70 bis 98 Gew.-% ist.

**3.** Mehrschichtfolie nach Anspruch 1, dadurch gekennzeichnet, daß das kristalline Polypropylen ein kristallines Propylen/α-Olefin-Copolymer mit einem Schmelzindex von 1 bis 50 g/10 Minuten, einem Schmelzpunkt von 110°C bis 145°C, einem Ethylengehalt von 1,0 bis 7 Gew.-%, einem Buten-1-Gehalt von 2,0 Gew.-% oder mehr und einem Propylengehalt von 70 Gew.-% oder mehr ist.

**Revendications**

**1.** Film multicouche composé d'une couche de film de polypropylène et d'une couche de film de substrat, caractérisé en ce que la couche de film de polypropylène a une composition comprenant 100 parties en poids d'un polypropylène cristallin et un total de 0,05 à 1,0 partie en poids d'un agent de glissement [A] qui est le béhénamide et d'un agent de glissement [B] qui est l'érucamide, le rapport en poids de l'agent de glissement [A] à l'agent de glissement [B] étant de 0,2:1 à 20:1, le film de polypropylène qui constitue ladite couche de film de polypropylène ayant un coefficient de frottement initial de 0,7 ou moins et la température à laquelle ledit coefficient de frottement devient égal à 0,7 étant égale ou supérieure à 45°C.

**2.** Film multicouche selon la revendication 1, caractérisé en ce que le polypropylène cristallin est un copolymère propylène/α-oléfine cristallin ayant une teneur en éthylène de 0 à 10% en poids, une teneur en butène-1 de 0 à 30% en poids et une teneur en propylène de 70 à 98% en poids.

**3.** Film multicouche selon la revendication 1, caractérisé en ce que le polypropylène cristallin est un copolymère propylène/α-oléfine cristallin ayant une vitesse d'écoulement à l'état fondu de 1 à 50 g/10 mn, un point de fusion de 110 à 145°C, une teneur en éthylène de 1,0 à 7,0% en poids, une teneur en butène-1 de 2,0% en poids ou plus et une teneur en propylène de 70% en poids ou plus.